# EUROPÄISCHE PATENTSCHRIFT

(11) **EP 0 451 478 B1**
(45) Veröffentlichungstag und Bekanntmachung des Hinweises auf die Patenterteilung: **16.06.1993**
(21) Anmeldenummer: 91102893.4
(22) Anmeldetag: 28.02.1991
(51) Int. Cl.: F16B 39/24, F21M 3/20

(54) **Leuchte für Fahrzeuge**
Headlight for motor-vehicles
Phare pour véhicules automobiles

(30) Priorität: 11.04.1990 DE 4011643
(43) Veröffentlichungstag der Anmeldung: 16.10.1991
(73) Patentinhaber: Hella KG Hueck & Co., 59552 Lippstadt (DE)
(72) Erfinder: Ewert, Alfred, W-4780 Lippstadt (DE)

(56) Entgegenhaltungen:
- DE-A- 1 400 872
- DE-C- 255 090
- US-A- 2 709 470

## Beschreibung

Die Erfindung bezieht sich auf eine Leuchte für Fahrzeuge, welche mit ihrem aus Kunststoff bestehenden Tragelement an einem Karosserieteil festsetzbar ist, mit folgenden Merkmalen:
- das Tragelement weist Wandungsabschnitte mit einer eingebrachten Befestigungsöffnung auf,
- auf einer Seitenfläche des Wandungsabschnitts ist eine aus Blech herausgestanzte Unterlegscheibe befestigt, welche
   - ein ausgestanztes Langloch aufweist, welches die Öffnung in dem Wandungsabschnitt überlagert und kleiner als diese ist,
   - vor ihrer Montage eine gewölbte Form aufweist und bei ihrer Montage mit der konkaven Seite auf dem Wandungsabschnitt aufgesetzt ist und an dem Wandungsabschnitt platt anliegend gedrückt ist,
   - durch ihre Streckung mit zwei gegenüberliegenden Randbereichen in sich zugewandte Abschnitte der Seitenfläche des Wandungsabschnittes eingreift.

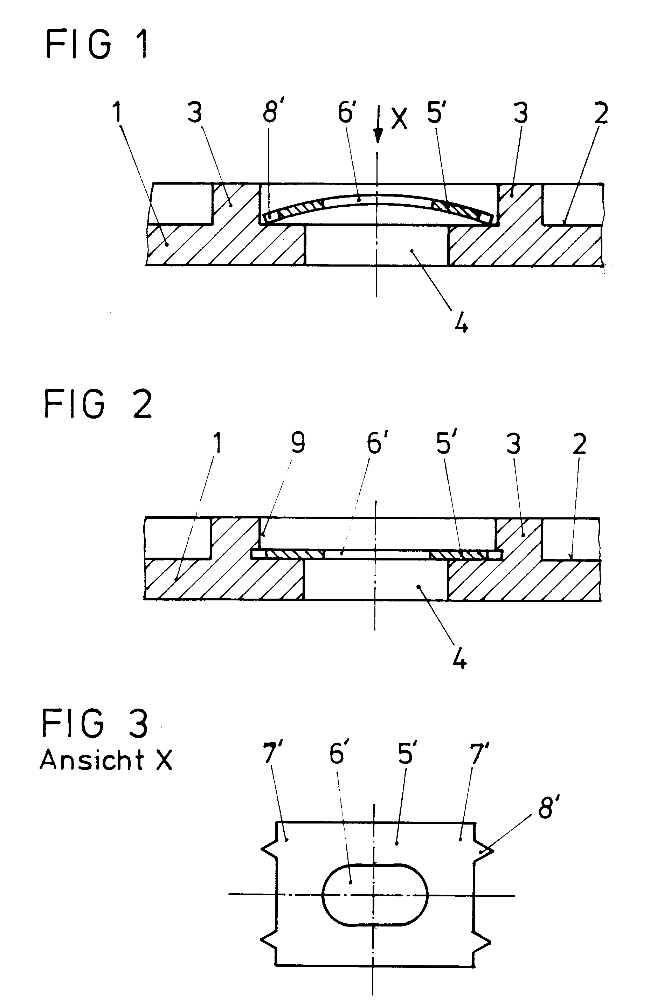

Solche Leuchten sind aus der Praxis bekannt, von denen in der Figur 1 bis 3 der Zeichnung der die Befestigungsöffnung aufweisende Wandungsabschnitt mit der an ihm befestigten Unterlegscheibe dargestellt ist. Dadurch ist die Unterlegscheibe verliersicher mit dem Tragelement verbunden und es ist somit nicht möglich, das Tragelement ohne die Unterlegscheibe an dem Karosserieteil zu befestigen. Um die Leuchte an dem Karosserieteil befestigen zu können, müssen in einem ersten Montageschritt die Öffnungen des Tragelements mit Öffnungen des Karosserieteils in eine übereinanderliegende Lage gebracht werden. Damit dies auch bei den bei der Fahrzeugkarosserie üblichen großen Toleranzbereichen möglich ist und darüber hinaus auch die Leuchte zu dem Karosserieteil ausgerichtet werden kann, sind Öffnungen in Unterlegscheiben als Langloch ausgeführt. In der ausgerichteten Lage der Leuchte wird das Tragelement durch Schraubenbolzen, welche durch die sich überlagernden Öffnungen hindurchgesteckt sind, mit dem Wandungsabschnitten gegen das Karosserieteil gepreßt. Hierbei ist es jedoch notwendig, daß der Schraubenbolzen mit einem genau ermittelten Drehmoment montiert wird, da bei einem größeren Drehmoment der Druck der Unterlegscheibe auf den Wandungsabschnitt so groß sein kann, daß durch Kaltfluß des Werkstoffes die Wandstärke des Wandungsabschnitts im Bereich der Unterlegscheibe zusammengedrückt wird und somit die Verbindung zwischen dem Tragelement und dem Karosserieteil nicht mehr ausreichend stabil ist. Die Stabilität der Verbindung ist auch dann nicht mehr gegeben, wenn der Schraubenbolzen mit einem zu kleinen Drehmoment montiert ist. Bei größeren Unterlegscheiben muß zwar nicht die Größe des Drehmoments genau eingehalten werden, jedoch muß dann die Unterlegscheibe dicker ausgeführt sein, damit sie durch den großen Druck des Kopfes des Schraubenbolzens oder der Muttern nicht deformiert wird. Außerdem ist es oftmals nicht möglich, größere Unterlegscheiben wegen den oft engen Platzverhältnissen in der Karosserie zu verwenden.

Aufgabe der Erfindung ist es, die im Gattungsbegriff beschriebene Leuchte derart zu verbessern, daß eine Unterlegscheibe in üblicher Größe verwendet werden kann und trotzdem bei der Montage des durch einen Schraubenbolzen an dem Karosserieteil festsetzbaren Tragelements der durch den Druck der Unterlegscheibe auf den Wandungsabschnitt entstehende Kaltfluß des Wandungsabschnitts in seiner Größe vorherbestimmbar ist, ohne daß dabei auf die Größe des Drehmoments Rücksicht genommen werden muß.

Diese Aufgabe wird nach der Erfindung dadurch gelöst, daß
- in die Unterlegscheibe zentral eine tiefgezogene Vertiefung eingebracht ist, deren umlaufende Seitenwandung als Distanzstück dient,
- das Langloch der Unterlegscheibe aus der Bodenfläche der tiefgezogenen topfförmigen Vertiefung der Unterlegscheibe ausgestanzt ist,
- die Bodenfläche eine dem Langloch entsprechende Form aufweist,
- die Seitenwandung der topfförmigen Vertiefung sich in die Öffnung des Wandungsabschnitts hinein erstreckt und gleich lang oder kürzer ausgeführt ist als der Wandungsabschnitt im Bereich seiner Öffnung dick ist,
- an dem Karosserieteil neben einer Seitenfläche des Wandungsabschnitts des Tragelements selbst auch die nach dem Ausstanzen des Langloches verbleibende Stirnfläche der topfförmigen Vertiefung anlegbar ist.

Bei einer solchen Lösung ist ab einer bestimmten Größe des Drehmoments, mit welchem der Schraubenbolzen montiert wird, gewährleistet, daß der Wandungsabschnitt immer mit einer ausreichend großen Kraft gegen das Karosserieteil gepreßt wird, und diese Kraft nicht so groß sein kann, daß die Stabilität der Verbindung zwischen dem Tragelement und dem Karosserieteil wegen zu großem Kaltfluß des Werkstoffes im Bereich der Unterlegscheibe zu klein ist.

Eine solche stabile Verbindung ist besonders vorteilhaft bei Scheinwerfer für Kraftfahrzeuge, welche eine Sonderbauform von Leuchten darstellen, da sie z. B. wegen der oft aus Glas bestehenden Lichtscheibe und dem aus Metall bestehenden Reflektor sehr schwer sind. Außerdem ist durch die stabile Verbindung eine schwingungsfreie Befestigung des Scheinwerfers an dem Karosserieteil möglich. Dies ist besonders bei abgeblendeten Scheinwerfern wichtig, damit der Gegenverkehr nicht geblendet wird.

Weiterhin ist es vorteilhaft, wenn das Langloch kleiner als die Bodenfläche der topfförmigen Vertiefung ausgeführt ist. Dadurch ist die Unterlegscheibe im Bereich der Stirnfläche seiner Seitenwandung stabiler gegen eine mögliche Deformation bei der Befestigung des Tragelements an der Karosserie ausgeführt.

Vorteilhaft ist es weiterhin, wenn in die sich zugewandten Abschnitte der Seitenfläche des Wandungsabschnitts aus den Randbereichen der Unterlegscheibe freigeschnittene, zahnartige Vorsprünge eingedrückt sind. Dadurch ist die Unterlegscheibe sehr sicher an dem Tragelement festgesetzt.

Ein weiterer Vorteil ist es, wenn die Unterlegscheibe vor ihrer Montage zwei um jeweils eine Biegelinie zur topfförmigen Vertiefung hin gebogene Randbereiche aufweist, welche mit dem zwischen ihnen verlaufenden Abschnitt die Wölbung der Unterlegscheibe bilden. Eine solche Lösung ist sehr einfach und kann sehr kostengünstig hergestellt werden. Je nach den Platzverhältnissen in der Karosserie können die Biegelinien entweder senkrecht oder parallel zur Längsausdehnung des Langloches verlaufen. Weiterhin ist es zweckmäßig, wenn die Biegelinien in der Nähe des Randes der topfförmigen Vertiefung verlaufen. Dadurch baut die Unterlegscheibe in ihren Außenabmessungen möglichst klein.

In der Zeichnung ist der Wandungsabschnitt und eine an ihm befestigte Unterlegscheibe einer bekannten Leuchte und eines erfindungsgemäßen Scheinwerfers dargestellt.
Figur 1 zeigt einen Längsschnitt durch den Wandungsabschnitt des Tragelements und der auf den Wandungsabschnitt aufgesetzten gewölbten Unterlegscheibe der bekannten Leuchte,
Figur 2 den Wandungsabschnitt der Figur 2 mit der an ihn befestigten Unterlegscheibe und
Figur 3 eine Ansicht aus Richtung X auf die gewölbte Unterlegscheibe der Figur 1, während
Figur 4 einen Längsschnitt durch den Wandungsabschnitt des Tragelements und der lose auf den Wandungsabschnitt aufgesetzten Unterlegscheibe des Scheinwerfers nach der Erfindung
Figur 5 eine Ansicht aus Richtung Y auf die Unterlegscheibe der Figur 4,
Figur 6 einen Längsschnitt durch den Wandungsabschnitt der Figur 4 mit der an ihm befestigten Unterlegscheibe und einem Karosserieteil, an welchem der Wandungsabschnitt durch einen Schraubenbolzen befestigt ist und
Figur 7 einen Schnitt nach der Linie A-A der Ausführungsform in Figur 6 darstellen.

Der in Figur 1 und Figur 2 dargestellte Wandungsabschnitt (1) eines aus Kunststoff hergestellten Tragelements einer Leuchte für Fahrzeuge weist zwischen zwei an die Seitenfläche (2) des Wandungsabschnitts (1) angeformten Rippen (3) die Befestigungsöffnung (4) und die auf die Seitenfläche (2) aufgesetzte Unterlegscheibe (5) auf. Die in Figur 1 auf den Wandungsabschnitt (1) aufgesetzte Unterlegscheibe (5) weist eine gewölbte Form auf, deren konkave Seite dem Wandungsabschnitt (1) zugewandt ist. Die Unterlegscheibe ist, wie aus Figur 3 zusehen ist, rechteckförmig ausgeführt und weist als zentrale Öffnung das Langloch (6) auf. An den quer zur Längsausdehnung des Langloches (6) verlaufenden Randbereichen (7) sind nach außen gerichtete, zahnförmige Vorsprünge (8) freigeschnitten.

In Figur 2 ist die Unterlegscheibe platt gedrückt und liegt an dem Randbereich der Befestigungsöffnung (4) an. Durch die Streckung der Unterlegscheibe, welche sie durch das Plattdrücken erfahren hat, sind ihre zahnförmigen Vorsprünge (8) in die sich zugewandten Abschnitte (9) der Rippen (3) eingedrückt.

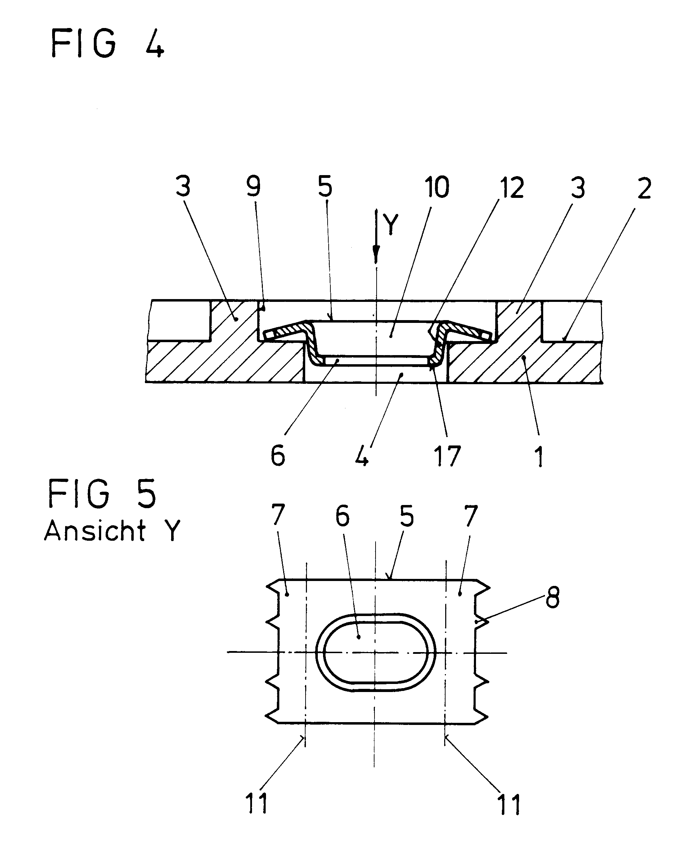

Nachfolgend sind die Unterschiede des in den Figuren 4 bis 7 dargestellten Wandungsabschnitts mit Unterlegscheibe eines Scheinwerfers nach der Erfindung gegenüber der in Figuren 1 bis 3 dargestellten bekannten Ausführungsform beschrieben. Wie aus den Figuren 4 und 5 zu sehen ist, weist die Unterlegscheibe (5) zentral die tiefgezogene Vertiefung (10) auf. Aus der Bodenfläche der Vertiefung (10) ist das Langloch (6) ausgestanzt, welches etwas kleiner als die Bodenfläche ausgeführt ist. Die gewölbte Form erhält die Unterlegscheibe (5) durch die um die Biegelinien (11) zu der topfförmigen Vertiefung (10) hin gebogenen Randbereiche (7), aus welchen die zahnförmigen Vorsprünge (8) freigeschnitten sind. Nach dem Aufsetzen der Unterlegscheibe (5) auf den Wandungsabschnitt (8) erstreckt sich die Seitenwandung (12) der Vertiefung (10) in die Befestigungsöffnung (4) hinein. Von der konkaven Seite der Unterlegscheibe ausgehend ist die umlaufende Seitenwandung (12) der Vertiefung (10) etwas kürzer ausgeführt als der Wandungsabschnitt (1) dick ist.

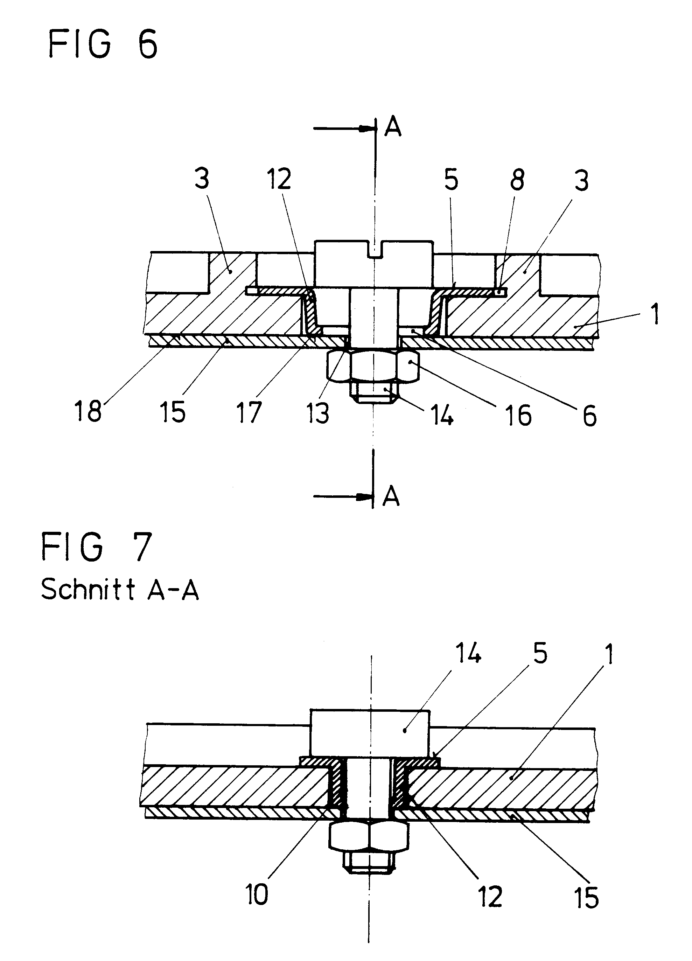

In den Figuren 6 und 7 ist die Unterlegscheibe (5) platt gedrückt und die zahnförmigen Vorsprünge (8) sind in die Rippen (3) eingedrückt. Außerdem ist aus den Figur 6 und 7 zu sehen, daß ein Schraubenbolzen (14) mit seinem Gewindeschaft vorraus durch das Langloch (6) der Unterlegscheibe und die Öffnung (13) in dem Karosserieteil (15) hindurchgesteckt ist. Auf den aus der öffnung (13) des Karosserieteils (15) herrausragenden Endabschnitts des Gewindeschafts ist die Mutter (16) aufgedreht. Hierbei muß die Mutter mit einem solchen großen Drehmoment angezogen werden, daß der Kopf des Schraubenbolzenz den umlaufenden Randbereich der Unterlegscheibe mit einer solchen Kraft gegen den Wandungsabschnitt (1) drückt, daß dieser durch Kaltfluß soweit zusammengedrückt wird, bis die Unterlegscheibe (5) mit ihrer Stirnfläche (17) der Seitenwandung (12) gegen den Karosserieteil (15) gedrückt wird.

Bei einer solchen Lösung trägt zum einen die Unterlegscheibe dazu bei, daß der Wandungsabschnitt (1) in einem vorherbestimmbaren Maß zusammengedrückt wird und somit mit einem ausreichenden Druck an dem Karosserieteil anliegt und zum anderen erhöht die Unterlegscheibe die stabile Verbindung zwischen dem Tragelement und dem Karosserieteil (15), weil sie mit ihrer Stirnfläche (17) an dem Karosserieteil (15) anliegt und mit den zahnförmigen Vorsprüngen (8) in die Rippen (3) klemmend eingreift.

## Patentansprüche

1. Leuchte für Fahrzeuge, welche mit ihrem aus Kunststoff bestehenden Tragelement an einem Karosserieteil festsetzbar ist, mit folgenden Merkmalen:
- das Tragelement weist Wandungsabschnitte (1) mit einer eingebrachten Befestigungsöffnung (4) auf,
- auf einer Seitenfläche (2) des Wandungsabschnitts (1) ist eine aus Blech herausgestanzte Unterlegscheibe (5) befestigt, welche
- ein ausgestanztes Langloch (6) aufweist, welches die öffnung (4) in dem Wandungsabschnitt überlagert und kleiner als diese ist,
- vor ihrer Montage eine gewölbte Form aufweist und bei ihrer Montage mit der konkaven Seite auf den Wandungsabschnitt (1) aufgesetzt ist und an den Wandungsabschnitt (1) platt anliegend gedrückt ist,
- durch ihre Streckung mit zwei gegenüberliegenden Randbereichen (7) in sich zugewandte Abschnitte (9) der Seitenfläche (2) des Wandungsabschnitts eingreift,
dadurch gekennzeichnet, daß
- in die Unterlegscheibe (5) zentral eine tiefgezogene Vertiefung (10) eingebracht ist, deren umlaufende Seitenwandung (12) als Distanzstück dient,
- das Langloch (6) der Unterlegscheibe (5) aus der Bodenfläche der tiefgezogenen, topfförmigen Vertiefung (10) der Unterlegscheibe (5) ausgestanzt ist,
- die Bodenfläche eine dem Langloch (6) entsprechende Form aufweist,
- die Seitenwandung (12) der topfförmigen Vertiefung (10) sich in die öffnung (4) des Wandungsabschnitts (1) hinein erstreckt und gleichlang oder kürzer ausgeführt ist als der Wandungsabschnitt (1) im Bereich seiner öffnung (5) dick ist,
- an den Karosserieteil (15) neben einer Seitenfläche (18) des Wandungsabschnitts (1) des Tragelements selbst auch die nach dem Ausstanzen des Langloches (6) verbleibende Stirnfläche (17) der topfförmigen Vertiefung (10) anlegbar ist.

2. Leuchte nach Anspruch 1, dadurch gekennzeichnet, daß das Langloch (6) kleiner als die Bodenfläche der topfförmigen Vertiefung (10) ausgeführt ist.

3. Leuchte nach Anspruch 1 oder 2, dadurch gekennzeichnet, daß in die sich zugewandten Abschnitte (9) der Seitenfläche (2) des Wandungsabschnitts (1) aus den Randbereichen der Unterlegscheibe (5) freigeschnittene zahnartige Vorsprünge (8) eingedrückt sind.

4. Leuchte nach einem der Ansprüche 1 bis 3, dadurch gekennzeichnet, daß vor der Montage der Unterlegscheibe ihre Randbereiche (7) um jeweils eine Biegelinie (11) zur topfförmigen Vertiefung (10) hin gebogen sind und zusammen mit dem zwischen ihnen verlaufenden Abschnitt die Wölbung der Unterlegscheibe (5) bilden.

5. Leuchte nach Anspruch 4, dadurch gekennzeichnet, daß die Biegelinien (11) entweder senkrecht oder parallel zur Längsausdehnung des Langloches (6) verlaufen.

6. Leuchte nach Anspruch 4 oder 5, dadurch gekennzeichnet, daß die Biegelinien (11) in der Nähe des Randes der topfförmigen Vertiefung (10) verlaufen.

7. Leuchte nach einem der Ansprüche 1 bis 6, dadurch gekennzeichnet, daß der äußere umlaufende Rand der Unterlegscheibe (5) rechteckförmig verläuft.

## Claims

1. A lamp for vehicles, which can be fastened to a bodywork part by means of its support element consisting of plastic, with the following features:
- the support element has wall sections (1) provided with a fastening aperture (4),
- a washer (5) punched from sheet metal is fastened to a side face (2) of the wall section (1), wherein the washer
- has a punched-out elongated hole (6) which overlies the aperture (4) in the wall section and is smaller than the latter,
- has a curved shape before it is fitted and when fitted is placed with its concave side on the wall section (1) and is pressed on to the wall section (1) so that it lies flat,
- engages at two opposite edge regions within mutually facing sections (9) of the side face (2) of the wall section, by means of its extension,
characterised in that
- a deep-drawn indentation (10), the surrounding sidewall (12) of which serves as a distance piece, is provided centrally in the washer (5),
- the elongated hole (6) of the washer (5) is punched out of the base area of the deep-drawn, pot-shaped indentation (10) in the washer (5),
- the base area has a shape corresponding to the elongated hole (6),
- the sidewall (12) of the pot-shaped indentation (10) extends into the aperture (4) of the wall section (1) and is constructed with a length equal to or less than the thickness of the wall section (1) in the region of its aperture (5),
- the end face (17) of the pot-shaped indentation (10) which remains after punching out the elongated hole (6) can also be placed on the bodywork part (15), in addition to a side face (18) of the wall section (1) of the support element itself.

2. A lamp according to claim 1, characterised in that the elongated hole (6) is made smaller than the base area of the pot-shaped indentation (10).

3. A lamp according to claims 1 or 2, characterised in that tooth-like projections (8), which are cut out from the edge regions of the washer (5), are pressed into the mutually facing sections (9) of the side face (2) of the wall section (1).

4. A lamp according to any one of claims 1 to 3, characterised in that before the washer is fitted its edge regions (7) are each bent about a bending line (11) towards the pot-shaped indentation (10), and together with the section running between them form the curvature of the washer (5).

5. A lamp according to claim 4, characterised in that the bending lines (11) run either perpendicularly or parallel to the longitudinal extent of the elongated hole (6).

6. A lamp according to claims 4 or 5, characterised in that the bending lines (11) run close to the edge of the pot-shaped indentation (10).

7. A lamp according to any one of claims 1 to 6, characterised in that the outer surrounding edge of the washer (5) is rectangular.

## Revendications

1. Dispositif d'éclairage pour véhicules qui peut être fixé à un élément de carrosserie par son élément porteur en matière plastique, et qui posséde les particularités suivantes :
- l'élément porteur comprend des segments de paroi (1) dans lesquels est ménagée une ouverture de fixation (4),
- sur une surface latérale (2) du segment de paroi (1), est fixée une rondelle (5) découpée dans de la tôle et qui
- présente un trou allongé découpé (6) qui se superpose à l'ouverture (4) du segment de paroi et est plus petit que celle-ci,
- présente une forme bombée avant son montage, est posée sur le segment de paroi (1) par sa face concave au moment du montage et est ensuite aplatie en appui sur le segment de paroi (1),
- mord dans des segments (9) de la surface latérale (2) du segment de paroi qui sont en regard l'un de l'autre, par deux régions marginales (7) opposées, sous l'effet de son allongement,
caractérisé en ce que la rondelle (5) présente en son centre un renfoncement embouti (10) dont la paroi latérale périphérique (12) joue le rôle d'entretoise,
- le trou allongé (6) de la rondelle (5) est découpé dans la surface de fond du renfoncement embouti (10), en forme de godet, de la rondelle (5),
- la surface de fond présente une forme correspondant au trou allongé (6),
- la paroi latérale (12) du renfoncement (10) en forme de godet est engagée dans l'ouverture (4) du segment de paroi (1) et est d'une longueur égale ou inférieure à l'épaisseur du segment de paroi (1) dans la région de son ouverture (5),
- la surface frontale (17) du renfoncement (10) en forme de godet qui reste après le découpage du trou allongé (6) peut être appliquée contre l'élément de carrosserie (15) en supplément d'une surface latérale (18) du segment de paroi (1) de l'élément porteur.

2. Dispositif d'éclairage selon la revendication 1, caractérisé en ce que le trou allongé (6) est plus petit que la surface de fond du renfoncement (10) en forme de godet.

3. Dispositif d'éclairage selon la revendication 1 ou 2, caractérisé en ce que des saillies (8) en forme de dents découpées dans les régions marginales de la rondelle (5) s'enfoncent dans les segments (9) opposés des parois latérales (2) du segment de paroi (1).

4. Dispositif d'éclairage selon une des revendications 1 à 3, caractérisé en ce qu'avant le montage de la rondelle, les régions marginales (7) de cette rondelle sont rabattues, chacune autour d'une ligne de pliage (11), en direction du renfoncement (10) en forme de godet, et forment le bombé de la rondelle (5) en combinaison avec le segment situé entre elles.

5. Dispositif d'éclairage selon la revendication 4, caractérisé en ce que les lignes de pliage (11) s'étendent, soit perpendiculairement, soit parallèlement à l'extension longitudinale du trou allongé (6).

6. Dispositif d'éclairage selon la revendication 4 ou 5, caractérisé en ce que les lignes de pliage (11) s'étendent dans le voisinage du bord du renfoncement (10) en forme de godet.

7. Dispositif d'éclairage selon une des revendications 1 à 6, caractérisé en ce que le nord périphérique extérieur de la rondelle (5) présente une forme rectangulaire.
